# EUROPÄISCHE PATENTSCHRIFT

(11) **EP 4 128 057 B1**
(45) Veröffentlichungstag und Bekanntmachung des Hinweises auf die Patenterteilung: **06.05.2026**
(21) Anmeldenummer: 21715527.4
(22) Anmeldetag: 24.03.2021
(51) Int. Cl.: G06N 3/098, G06N 3/045, G06N 3/0464, G06N 3/0495, G06N 3/082, G06N 3/0895

(54) **VERFAHREN UND SYSTEM ZUM BEREITSTELLEN MINDESTENS EINES KOMPRIMIERTEN UND SPEZIALISIERTEN NEURONALEN NETZES FÜR EIN FAHRZEUG**
METHOD AND SYSTEM FOR PROVIDING AT LEAST ONE COMPRESSED AND SPECIALIZED NEURAL NETWORK FOR A VEHICLE
PROCÉDÉ ET SYSTÈME POUR FOURNIR AU MOINS UN RÉSEAU NEURONAL COMPRESSÉ ET SPÉCIALISÉ POUR UN VÉHICULE

(30) Priorität: 24.03.2020 DE 102020203817
(43) Veröffentlichungstag der Anmeldung: 08.02.2023
(73) Patentinhaber: VOLKSWAGEN AKTIENGESELLSCHAFT, 38440 Wolfsburg (DE)
(72) Erfinder: HÜGER, Fabian, 38302 Wolfenbüttel (DE); SCHLICHT, Peter, 38442 Wolfsburg (DE)
(86) Internationale Anmeldenummer: PCT/EP2021/057536
(87) Internationale Veröffentlichungsnummer: WO 2021/191257

(56) Entgegenhaltungen:
- WO-A1-2019/133194
- JELENA KOCIC ET AL: "An End-to-End Deep Neural Network for Autonomous Driving Designed for Embedded Automotive Platforms", SENSORS, vol. 19, no. 9, 3 May 2019 (2019-05-03), pages 2064, XP055759335, DOI: 10.3390/s19092064
- GUO TIANYU ET AL: "Robust Student Network Learning", IEEE TRANSACTIONS ON NEURAL NETWORKS AND LEARNING SYSTEMS, 1 January 2019 (2019-01-01), Piscataway, NJ, USA, pages 1 - 14, XP055817657, ISSN: 2162-237X, DOI: 10.1109/TNNLS.2019.2929114

## Beschreibung

Die Erfindung betrifft ein Verfahren und ein System zum Bereitstellen mindestens eines komprimierten und spezialisierten Neuronalen Netzes für ein Fahrzeug.

Moderne Fahrerassistenzsysteme und Fahrfunktionen zum automatisierten Fahren verwenden zunehmend maschinelles Lernen, um unter anderem die Fahrzeugumgebung einschließlich anderer Verkehrsteilnehmer (z.B. Fußgänger und weitere Fahrzeuge) zu erkennen und deren Verhalten zu beschreiben. Hierbei erfolgt die Auswertung von Eingabedaten (Input) aus verschiedenen Quellen (z.B. Kameras, Radar, Lidar) durch tiefe neuronale Netze, welche aus diesen unter anderem pixelweise Klassifikationen (semantische Segmentierung) oder Umschließungsrahmen (bounding box) erkannter Objekte erzeugen.

In beiden Fällen werden Faltungsnetze (engl. convolutional neural networks, CNN) eingesetzt, welche im Training die Gewichte sogenannter Filter basierend auf dem Input parametrisieren. Leistungsfähige Neuronale Netze nutzen hierbei zunehmend eine Vielzahl von Filtern und Schichten (engl. layer), sodass ein benötigter Zeit- bzw. Rechenaufwand zur Verarbeitung (Inferenz) von Eingabedaten zu Ausgaben hoch ist. Da der Anwendung von Neuronalen Netzen im Bereich des automatisierten Fahrens aufgrund der dynamischen Umgebung harte Einschränkungen bezüglich einer benötigten Rechenzeit obliegen und gleichzeitig die in Fahrzeugen einsetzbare Hardware (Rechenkapazitäten) nicht beliebig skaliert werden kann, ist die Größe des Neuronalen Netzes ein limitierender Faktor bezüglich deren Einsatzmöglichkeiten in solchen Systemen.

Um eine Größe des Neuronalen Netzes und hiermit eine zum Ausführen benötigte Rechenzeit zu verringern, ist das sogenannte Schüler-Lehrer-Lernverfahren (engl. Student-Teacher Learning) bekannt. Beim Student-Teacher Learning werden statt eines einzelnen Neuronalen Netzes zwei Modelle trainiert. Hierbei fungiert das erste als "Lehrer" (teacher) und das zweite als "Schüler" (student). Das Schüler-Modell wird hierbei ebenfalls mittels der Eingangsdaten des Lehrer-Modells trainiert. Dabei gibt das Lehrer-Modell in jedem Schritt Informationen an das Schüler-Modell weiter, sodass sich das Schüler-Modell an das Lehrer-Modell anpassen kann. In der Regel wird für das resultierende Schüler-Modell eine kleinere Architektur des Neuronalen Netzes verwendet, sodass dieses gegenüber dem Lehrer-Modell komprimiert ist.

Zum Verkleinern eines Neuronalen Netzes sind ferner Pruning-Verfahren, Quantisierungsverfahren und das AutoML for Model Compression (AMC)-Verfahren bekannt.

Bei allen bekannten Verfahren wird jedoch eine Vielzahl an markierten (gelabelten) Trainingsdaten benötigt, was z.B. für die semantische Segmentierung mit hohen Kosten verbunden ist.

Aus J. Kokic et al., An End-to-Ende Deep Neural Network for Autonomous Driving Designed for Embedded Automotive Platforms, Sensors, Bd. 19, Nr. 9, 3. Mai 2019, Seite 2064, DOI: 10.3390/s19092064, ist ein tiefes Neuronales Netz für das autonome Fahren bekannt.

Aus G. Tianyu et al., Robust Student Network Learning, IEEE Transactions on Neural Networks and Learning Systems, 1. Januar 2019, Seiten 1-14, Piscataway, NJ, USA, DOI: 1 0.1109/TNNLS.2019.2929114, ist ein robustes Lernverfahren für Schüler-Neuronale Netze bekannt.

Der Erfindung liegt die Aufgabe zu Grunde, ein Verfahren und ein System zum Bereitstellen mindestens eines komprimierten und spezialisierten Neuronalen Netzes für ein Fahrzeug zu schaffen, bei denen weniger markierte Trainingsdaten benötigt werden.

Die Aufgabe wird erfindungsgemäß durch ein Verfahren mit den Merkmalen des Patentanspruchs 1 und ein System mit den Merkmalen des Patentanspruchs 10 gelöst. Vorteilhafte Ausgestaltungen der Erfindung ergeben sich aus den Unteransprüchen.

Insbesondere wird ein Verfahren zum Bereitstellen mindestens eines komprimierten und spezialisierten Neuronalen Netzes für ein Fahrzeug zur Verfügung gestellt, wobei ein Global-Neuronales Netz mittels eines Trainingsdatensatzes auf einem Backendserver trainiert wird, wobei das trainierte Global-Neuronale Netz an mindestens ein Aufklärungsfahrzeug einer Fahrzeugflotte übermittelt wird, wobei mindestens ein Experten-Neuronales Netz mittels Sensordaten, die jeweils in dem mindestens einen Aufklärungsfahrzeug mittels mindestens eines Sensors in einem mit einer Spezialisierung des Experten-Neuronalen Netzes korrespondierenden Kontext erfasst wurden, mittels eines Schüler-Lehrer-Lernverfahrens lokal auf dem mindestens einen Aufklärungsfahrzeug trainiert wird, wobei ein Inferenzergebnis des Global-Neuronalen Netzes auf den erfassten Sensordaten hierbei als jeweilige Grundwahrheit verwendet wird, und wobei das mindestens eine trainierte Experten-Neuronale Netz bereitgestellt wird.

Ferner wird insbesondere ein System zum Bereitstellen mindestens eines komprimierten und spezialisierten Neuronalen Netzes für ein Fahrzeug geschaffen, umfassend einen Backendserver, und mindestens eine Datenverarbeitungseinrichtung mindestens eines Aufklärungsfahrzeugs einer Fahrzeugflotte, wobei der Backendserver dazu eingerichtet ist, ein Global-Neuronales Netz mittels eines Trainingsdatensatzes zu trainieren und das trainierte Global-Neuronale Netz an das mindestens eine Aufklärungsfahrzeug zu übermitteln, und wobei die Datenverarbeitungseinrichtung des mindestens einen Aufklärungsfahrzeuges dazu eingerichtet ist, mindestens ein Experten-Neuronales Netz mittels Sensordaten, die jeweils in dem mindestens einen Aufklärungsfahrzeug mittels mindestens eines Sensors in einem mit einer Spezialisierung des Experten-Neuronalen Netzes korrespondierenden Kontext erfasst wurden, mittels eines Schüler-Lehrer-Lernverfahrens lokal zu trainieren, und hierbei ein Inferenzergebnis des Global-Neuronalen Netzes auf den erfassten Sensordaten als jeweilige Grundwahrheit zu verwenden, und das mindestens eine trainierte Experten-Neuronale Netz bereitzustellen.

Das Verfahren und das System ermöglichen es, ein Neuronales Netz auf einen bestimmten Kontext zu spezialisieren. Hierdurch wird ein Experten-Neuronales Netz geschaffen, dass in seinem Umfang, und daher auch in Bezug auf eine zum Ausführen notwendige Rechenleistung, gegenüber dem Global-Neuronalen Netz begrenzt werden kann. Zum Trainieren des Experten-Neuronalen Netzes werden Sensordaten in einem mit einer gewünschten Spezialisierung des Experten-Neuronalen Netzes korrespondierenden Kontext verwendet. Die Sensordaten werden mittels mindestens eines Sensors in mindestens einem Aufklärungsfahrzeug einer Fahrzeugflotte erfasst. Um die erfassten Sensordaten zum Trainieren des Experten-Neuronalen Netzes zu verwenden, wird ein für die erfassten Sensordaten von einem Global-Neuronalen Netz inferiertes Ergebnis als Grundwahrheit verwendet und das Experten-Neuronale Netz wird mittels eines Schüler-Lehrer-Lernverfahrens trainiert. Das Global-Neuronale Netz bildet hierbei das Lehrer-Modell und das Experten-Neuronale Netz das Schüler-Modell. Das Global-Neuronale Netz wird hierzu vorher auf einem Backendserver trainiert, insbesondere mittels umfangreicher markierter (gelabelter) Trainingsdaten. Die Trainingsdaten sind hierbei insbesondere nicht auf einen bestimmten Kontext beschränkt.

Ein Vorteil des Verfahrens und des Systems ist, dass hiermit bereitgestellte Experten-Neuronalen Netze dem Umfang nach kleiner ausgebildet sein können, das heißt die Experten-Neuronalen Netze sind komprimiert gegenüber dem Global-Neuronalen Netz. Durch die Spezialisierung auf einen bestimmten Kontext, in dem ein Fahrzeug sich gerade befindet, kann jedoch trotzdem eine hohe Güte bei den mittels eines solchen Experten-Neuronalen Netzes inferierten Ergebnissen erreicht werden. Gleichzeitig benötigt das kontextspezifische Trainieren des Experten-Neuronalen Netzes auf den Aufklärungsfahrzeugen keine umfangreichen markierten (gelabelten) Trainingsdaten, sondern lediglich erfasste Sensordaten. Eine beim Trainieren notwendige Grundwahrheit wird von dem Global-Neuronalen Netz bereitgestellt, das beim Trainieren kontextunabhängig von allen Experten-Neuronalen Netzen als Lehrer-Modell verwendet wird.

Ein Experten-Neuronales Netz ist insbesondere hinsichtlich eines Umfangs seiner strukturellen Elemente (z.B. Neuronen, Filter, Schichten etc.) reduziert gegenüber dem Global-Neuronalen Netz, sodass zum Ausführen eines Experten-Neuronalen Netzes deutlich weniger Rechenleistung und Speicherplatz benötigt werden. Die Neuronalen Netze sind insbesondere tiefe Neuronale Netze, insbesondere Faltungsnetze. Ein Experten-Neuronales Netz stellt eine bestimmte Funktionalität bereit und ist auf einen bestimmten Kontext spezialisiert. Beispielsweise kann vorgesehen sein, dass ein Experten-Neuronales Netz als Funktionalität eine Objekterkennung bereitstellt. Diese Funktionalität wird dann gemäß des beschriebenen Verfahrens für einen bestimmten Kontext trainiert, beispielsweise für einen der folgenden Kontexte: eine bestimmte Region, ein bestimmtes Land, Autobahn, Stadt, Sonnenschein, Regenwetter, Tag, Nacht, Sommer, Winter etc. Ein Global-Neuronales Netz ist hingegen nicht auf einen bestimmten Kontext spezialisiert, es ist daher strukturell umfangreicher und benötigt zum Ausführen mehr Rechenleistung und mehr Speicherplatz.

Ein Aufklärungsfahrzeug ist insbesondere ein Fahrzeug einer Fahrzeugflotte mit einer gegenüber einem normalen Fahrzeug der Fahrzeugflotte aufgerüsteten Hardware, das heißt ein Aufklärungsfahrzeug kann eine gegenüber einem normalen Fahrzeug erhöhte Rechenleistung und einen größeren Speicherplatz bereitstellen. Innerhalb einer Fahrzeugflotte kann es eine Vielzahl von Aufklärungsfahrzeugen geben, die zum Trainieren von gleichartigen und/oder verschiedenartigen Experten-Neuronalen Netzes eingerichtet sind.

Ein Fahrzeug ist insbesondere ein Kraftfahrzeug. Ein Fahrzeug kann prinzipiell jedoch auch ein anderes Land-, Wasser-, Schienen-, Luft- oder Raumfahrzeug sein.

Teile des Systems, insbesondere der Backendserver und die Datenverarbeitungseinrichtungen der Aufklärungsfahrzeuge, können einzeln oder zusammengefasst als eine Kombination von Hardware und Software ausgebildet sein, beispielsweise als Programmcode, der auf einem Mikrocontroller oder Mikroprozessor ausgeführt wird. Es kann jedoch auch vorgesehen sein, dass Teile einzeln oder zusammengefasst als anwendungsspezifische integrierte Schaltung (ASIC) ausgebildet sind.

In einer Ausführungsform ist vorgesehen, dass das Bereitstellen der jeweils trainierten Experten-Neuronalen Netze ein Übermitteln der Experten-Neuronalen Netze von den Aufklärungsfahrzeugen an den Backendserver umfasst, wobei die übermittelten Experten-Neuronalen Netze auf dem Backendserver zusammengeführt werden, und wobei zumindest ein zusammengeführtes Experten-Neuronales Netz jeweils bereitgestellt wird, indem dieses zur Anwendung an Fahrzeuge der Fahrzeugflotte übermittelt wird. Hierdurch kann ein verbessertes Experten-Neuronales Netz bereitgestellt werden. Es wird hierbei davon ausgegangen, dass jeweils gleichartige Experten-Neuronalen Netze zusammengefasst werden, das heißt Experten-Neuronale Netze mit gleicher Funktionalität, die auf den gleichen Kontext spezialisiert sind. In einem einfachen Beispiel können hierzu elementeweise Mittelwerte aus gleichartigen Parametern (Gewichtungen, Filterparameter etc.) der einzelnen trainierten Experten-Neuronalen Netze gebildet werden. In einer Weiterbildung wird ein solcher Mittelwert durch Werte eines weiteren Experten-Neuronalen Netzes nur noch geändert, wenn eine vorgegebene Differenz der Werte zu den bereits bestimmten Mittelwerten überschritten wird.

In einer Ausführungsform ist vorgesehen, dass das Bereitstellen der jeweils trainierten Experten-Neuronalen Netze ein Übermitteln der Experten-Neuronalen Netze von den Aufklärungsfahrzeugen an den Backendserver umfasst, wobei die übermittelten Experten-Neuronalen Netze auf dem Backendserver mittels des Trainingsdatensatzes nachtrainiert werden. Hierdurch können hinsichtlich einer Güte verbesserte Experten-Neuronale Netze bereitgestellt werden. Das Nachtrainieren erfolgt in an sich bekannter Weise. Insbesondere ist vorgesehen, dass das Nachtrainieren nach dem Zusammenfassen von mehreren gleichartigen trainierten Experten-Neuronalen Netzen erfolgt.

Ein Übermitteln der Neuronalen Netze umfasst insbesondere ein Übermitteln von Informationen, die eine Struktur und Parameter des jeweiligen Neuronalen Netzes beschreiben.

In einer Ausführungsform ist vorgesehen, dass die übermittelten Experten-Neuronalen Netze in Bezug auf mindestens ein Optimierungskriterium optimiert werden und/oder ein zusammengeführtes Experten-Neuronales Netz in Bezug auf mindestens ein Optimierungskriterium optimiert wird. Ein Optimierungskriterium kann beispielsweise eine Robustheit des (zusammengeführten) Experten-Neuronalen Netzes gegenüber Rauschen, einer Helligkeitsänderung und/oder adversarialen Attacken sein. Ferner kann ein Optimierungskriterium eine Stabilität des (zusammengeführten) Experten-Neuronalen Netzes beinhalten, beispielsweise, um in erfassten Kamerabildern ein Inferenzergebnis auch im Zeitverlauf möglichst stabil auszugestalten. Ferner kann ein Optimierungskriterium auch eine vorgegebene Laufzeit bzw. eine benötigte bzw. vorgegebene Rechenkapazität auf einer Recheneinrichtung eines Fahrzeugs sein, auf dem das Experten-Neuronale Netz eingesetzt werden soll.

In einer Ausführungsform ist vorgesehen, dass das mindestens eine Experten-Neuronale Netz vor dem Trainieren mittels des Schüler-Lehrer-Lernverfahrens bereits vortrainiert ist oder auf dem Backendserver vortrainiert wird. Hierdurch kann das Trainieren mittels des Schüler-Lehrer-Lernverfahrens auf den Aufklärungsfahrzeugen beschleunigt werden. Das Vortrainieren auf dem Backendserver erfolgt insbesondere mittels des Trainingsdatensatzes. Hierbei kann vorgesehen sein, dass Trainingsdaten nach dem jeweiligen Kontext aus dem Trainingsdatensatz ausgewählt werden.

In einer Ausführungsform ist vorgesehen, dass ein aktueller Kontext, in dem sich ein Aufklärungsfahrzeug befindet, mittels einer Kontextdetektionseinrichtung bestimmt wird, wobei zum Trainieren aus mehreren Experten-Neuronalen Netzen ein mit dem bestimmten Kontext korrespondierendes Experten-Neuronales Netz ausgewählt wird und das ausgewählte Experten-Neuronale Netz trainiert wird. Hierdurch können auf einem Aufklärungsfahrzeug mehrere Experten-Neuronale Netze vorgehalten und bei Gelegenheit, das heißt bei jeweils korrespondierendem Kontext, mittels jeweils erfasster Sensordaten trainiert werden. Insbesondere werden für den jeweiligen Kontext Sensordaten erfasst und gesammelt, beispielsweise mittels einer hierfür eingerichteten Speichereinrichtung. Im Ruhezustand des Fahrzeugs, wenn sämtliche Rechenleistung zur Verfügung steht, erfolgt das Trainieren des Experten-Neuronalen-Netzes mit Hilfe der vorher erfassten und gesammelten Sensordaten in einem Stapeldurchlauf. In einem einfachen Beispiel können vier untrainierte Experten-Neuronale Netze zum Erkennen von Objekten auf einer Autobahn bei Sonnenschein, auf einer Autobahn bei Regen, in der Stadt bei Sonnenschein und in der Stadt bei Regen vorgesehen sein. Je nachdem, welcher der Kontexte aktuell vorliegt, werden jeweils zugehörige Sensordaten erfasst und gesammelt. Das zum Kontext zugehörige Experten-Neuronale Netz wird dann ausgewählt und beispielsweise wie voranstehend beschrieben in einem Ruhezustand des Fahrzeugs trainiert.

In einer Ausführungsform ist vorgesehen, dass mindestens ein untrainiertes und/oder vortrainiertes Experten-Neuronales Netz vor dem Trainieren von dem Backendserver an das mindestens eine Aufklärungsfahrzeug übermittelt wird. Hierdurch können die Experten-Neuronalen Netze mittels des Backendservers bereits eindeutig in Bezug auf eine Spezifikation (z.B. Funktionalität und Expertise in einem bestimmten Kontext), eine Topologie (d.h. eine Größe und eine Struktur, insbesondere ein Aufbau, eine Anzahl der Elemente, der Neuronen, der Filter etc., bzw. eine Anzahl der Schichten des Expertise-Neuronalen Netzes) und eine Initialisierung, das heißt ein Vortraining, definiert werden. Dies ermöglicht es, maßgeschneiderte Lösungen für bestimmte Problemstellungen, Funktionalitäten und eine jeweils bereitgestellte Infrastruktur (Sensoren, Rechenkapazität etc.) bereitzustellen.

In einer Ausführungsform ist vorgesehen, dass eine Spezialisierung für mindestens ein Experten-Neuronales Netz mittels eines Verfahrens des Maschinenlernens festgelegt wird. Hierdurch kann eine Spezialisierung flexibler ausgestaltet werden. Insbesondere kann das System, insbesondere auf einem Aufklärungsfahrzeug, selbst eine Spezialisierung lernen und/oder vorschlagen. Hierdurch kann eine Güte der bereitgestellten Experten-Neuronalen Netze erhöht werden, weil diese für Spezialisierungen bzw. Kontexte ausgebildet und trainiert werden, die Merkmale berücksichtigen, die einer menschlichen Erfahrung bzw. einer Vorgabe der Spezialisierung durch einen menschlichen Experten nicht unmittelbar zugänglich sein können. Hierdurch kann erreicht werden, dass eine erhöhte bzw. maximale Güte des Experten-Neuronalen Netzes erreicht wird. Dem liegt der Gedanke zugrunde, dass für einen menschlichen Experten plausible und vorteilhaft erscheinende Spezialisierungen der Experten-Neuronalen Netze im Hinblick auf eine Güte der trainierten Experten-Neuronalen Netze schlechter sein können als Spezialisierungen der Experten-Neuronalen Netze, die mittels eines Maschinenlernverfahrens aufgefunden und festgelegt wurden.

In einer Ausführungsform ist vorgesehen, dass das Global-Neuronale Netz und das mindestens eine Experten-Neuronale Netz eine Funktion für das automatisierte Fahren eines Fahrzeugs und/oder für eine Fahrerassistenz des Fahrzeugs und/oder für eine Umfelderfassung und/oder Umfeldwahrnehmung bereitstellen.

Weitere Merkmale zur Ausgestaltung des Systems ergeben sich aus der Beschreibung von Ausgestaltungen des Verfahrens. Die Vorteile des Systems sind hierbei jeweils die gleichen wie bei den Ausgestaltungen des Verfahrens.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Ausführungsform des Systems zum Bereitstellen mindestens eines komprimierten Neuronalen Netzes für ein Fahrzeug;
- Fig. 2: ein schematisches Ablaufdiagramm zur Verdeutlichung einer Ausführungsform des Verfahrens zum Bereitstellen mindestens eines komprimierten Neuronalen Netzes für ein Fahrzeug.

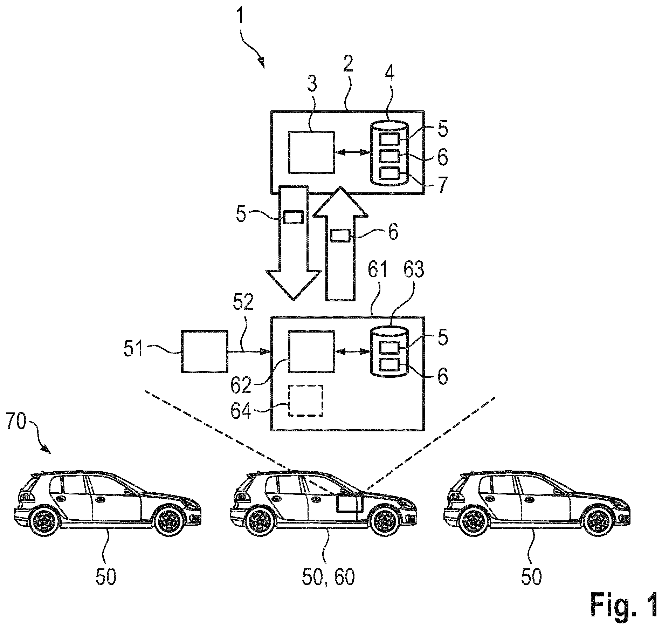

In Fig. 1 ist eine schematische Darstellung einer Ausführungsform des Systems 1 zum Bereitstellen mindestens eines komprimierten und spezialisierten Neuronalen Netzes 6 für ein Fahrzeug 50 gezeigt.

Das System 1 umfasst einen Backendserver 2 und mehrere Datenverarbeitungseinrichtungen 61 von Aufklärungsfahrzeugen 60 (der Übersichtlichkeit halber sind nur ein Aufklärungsfahrzeug 60 und eine Datenverarbeitungseinrichtung 61 gezeigt). Die Aufklärungsfahrzeuge 60 sind Fahrzeuge 50 einer Fahrzeugflotte 70.

Der Backendserver 2 umfasst eine Recheneinrichtung 3 und eine Speichereinrichtung 4. Die Recheneinrichtung 3 kann auf Daten, die in der Speichereinrichtung 4 hinterlegt sind, zugreifen und Rechenoperationen auf diesen Daten ausführen. Der Backendserver 2 stellt ein Global-Neuronales Netz 5, insbesondere eine Funktionalität bzw. Struktur des Global-Neuronalen Netzes 5, bereit und trainiert das Global-Neuronale Netz 5 mittels eines Trainingsdatensatzes 7, der markierte (gelabelte) Trainingsdaten umfasst. Das trainierte Global-Neuronale Netz 5 wird von dem Backendserver 2 an die Aufklärungsfahrzeuge 60 übermittelt. Dies erfolgt über geeignete Kommunikationsschnittstellen (nicht gezeigt).

Das Aufklärungsfahrzeug 60 hat im Vergleich zu normalen Fahrzeugen 50 der Fahrzeugflotte 70 eine leistungsstärkere Hardware, das heißt insbesondere eine größere Rechenkapazität und einen größeren Speicherplatz. Das Aufklärungsfahrzeug 60 umfasst eine Datenverarbeitungseinrichtung 61. Die Datenverarbeitungseinrichtung 61 umfasst einen Recheneinrichtung 62 und eine Speichereinrichtung 63. Die Recheneinrichtung 62 kann auf Daten, die in der Speichereinrichtung 63 hinterlegt sind, zugreifen und Rechenoperationen auf diesen Daten ausführen. Die Datenverarbeitungseinrichtung 61 des Aufklärungsfahrzeugs 60 empfängt das übermittelte Global-Neuronale Netz 5 und hinterlegt dieses in der Speichereinrichtung 63.

Die Datenverarbeitungseinrichtung 61 trainiert lokal mindestens ein Experten-Neuronales Netz 6 mittels Sensordaten 52, die jeweils in dem mindestens einen Aufklärungsfahrzeug 60 mittels mindestens eines Sensors 51 in einem mit einer Spezialisierung des Experten-Neuronalen Netzes 6 korrespondierenden Kontext erfasst wurden. Das Trainieren erfolgt mittels eines Schüler-Lehrer-Lernverfahrens. Hierbei wird ein Inferenzergebnis des Global-Neuronalen Netzes 5 auf den erfassten Sensordaten 10 als jeweilige Grundwahrheit verwendet. Das Experten-Neuronale Netz 6 ist strukturell und einem Umfang nach kleiner ausgebildet als das Global-Neuronale Netz 5.

Insbesondere werden hierzu Sensordaten 52 des mindestens einen Sensors 51 erfasst und gesammelt, beispielsweise werden die Sensordaten 52 in einer Betriebsphase des Aufklärungsfahrzeugs 60 gesammelt und in der Speichereinrichtung 63 hinterlegt und in einer Ruhephase, wenn alle zur Verfügung stehenden Rechenkapazitäten genutzt werden können, wird anschließend das Trainieren des Experten-Neuronalen Netzes 6 durchgeführt.

Nach dem Trainieren wird das trainierte Experten-Neuronale Netz 6 bereitgestellt. Insbesondere wird das trainierte Experten-Neuronale Netz 6 an den Backendserver 2 übermittelt. Dies erfolgt insbesondere für eine Vielzahl von gleichartigen und/oder verschiedenartigen Experten-Neuronalen Netzen 6 von einer Vielzahl von Aufklärungsfahrzeugen 60. Hierbei bedeutet gleichartig, dass die Experten-Neuronalen Netze 6 die gleiche Funktionalität im gleichen Kontext bereitstellen. Verschiedenartig bedeutet hingegen, dass die Experten-Neuronalen Netze 6 eine unterschiedliche Funktionalität und/oder eine solche in einem unterschiedlichen Kontext bereitstellen.

Insbesondere werden die bereitgestellten Experten-Neuronalen Netze 6 anschließend von dem Backendserver 2 an die Fahrzeuge 50 der Fahrzeugflotte 70 übermittelt und dort beispielsweise jeweils in einen Arbeitsspeicher einer Steuereinrichtung (nicht gezeigt) eingeladen, wobei die Steuereinrichtung anschließend die jeweilige Funktionalität der trainierten Experten-Neuronalen Netze 6 für das jeweilige Fahrzeug 50 bereitstellt (z.B. Objekterkennung im jeweiligen Kontext etc.), indem das trainierte Experten-Neuronale Netz 6 auf aktuell erfasste Sensordaten 52 angewendet wird.

Es ist insbesondere vorgesehen, dass das Global-Neuronale Netz 5 und das mindestens eine Experten-Neuronale Netz 6 eine Funktion für das automatisierte Fahren der Fahrzeuge 50 der Fahrzeugflotte 70 und/oder für eine Fahrerassistenz der Fahrzeuge 50 und/oder für eine Umfelderfassung und/oder Umfeldwahrnehmung bereitstellen.

Es kann vorgesehen sein, dass die übermittelten Experten-Neuronalen Netze 6 auf dem Backendserver 2 zusammengeführt werden. Anschließend wird dann zumindest ein zusammengeführtes Experten-Neuronales Netz 6 zur Anwendung an Fahrzeuge 50 der Fahrzeugflotte 70 übermittelt. Das Zusammenführen kann insbesondere ein Mitteln von Parametern der übermittelten Experten-Neuronalen Netze 6 umfassen, wobei beispielsweise Gewichtungen und/oder Filterparameter der strukturell gleich aufgebauten Experten-Neuronalen Netze 6 gemittelt werden.

Es kann ferner vorgesehen sein, dass die übermittelten Experten-Neuronalen Netze 6 auf dem Backendserver 2 mittels des Trainingsdatensatzes 7 nachtrainiert werden. Hierdurch kann eine Güte weiter erhöht werden.

Es kann vorgesehen sein, dass die übermittelten Experten-Neuronalen Netze 6 in Bezug auf mindestens ein Optimierungskriterium optimiert werden und/oder ein zusammengeführtes Experten-Neuronales Netz 6 in Bezug auf mindestens ein Optimierungskriterium optimiert wird. Insbesondere kann ein Optimierungskriterium eine Robustheit gegenüber Rauschen in den Sensordaten oder einer Variation in einer Helligkeit von erfassten Kamerabildern etc. und/oder eine Robustheit gegenüber adversarialen Attacken beinhalten. Ferner kann ein Optimierungskriterium auch eine Stabilität über der Zeit beinhalten, das heißt beispielsweise eine Stabilität einer Ausgabe des Experten-Neuronalen Netzes 6 von Bild zu Bild innerhalb eines Videos aus erfassten Kamerabildern. Ein weiteres Beispiel für ein Optimierungskriterium ist eine Optimierung im Hinblick auf eine zur Verfügung stehende oder bereitgestellte Rechenleistung, die nicht überschritten werden darf. Zum Beispiel können Verfahren wie Pruning oder eine Quantisierung verwendet werden, um eine benötigte Rechenleistung bzw. einen benötigten Speicherplatz beim Ausführen des Experten-Neuronalen Netzes 6 weiter zu verringern, das heißt das Experten-Neuronale Netz 6 weiter zu komprimieren.

Es kann vorgesehen sein, dass das mindestens eine Experten-Neuronale Netz 6 vor dem Trainieren mittels des Schüler-Lehrer-Lernverfahrens auf dem Backendserver 2 vortrainiert wird. Beispielsweise kann der Backendserver 2 eine Spezialisierung, das heißt eine gewünschte Expertise (z.B. Objektdetektion in Stadt oder Land etc.) und eine Topologie (strukturelle Beschaffenheit des Experten-Neuronalen Netzes 6) festlegen und ein entsprechend definiertes Experten-Neuronales Netz 6 in der Speichereinrichtung 4 erzeugen. Das erzeugte Experten-Neuronale Netz 6 ist dann noch untrainiert. Der Backendserver 2 trainiert das erzeugte Experten-Neuronale Netz 6 dann mittels des Trainingsdatensatzes 7 vor, sodass ein anschließendes Trainieren mit Hilfe der erfassten Sensordaten 52 auf den Aufklärungsfahrzeugen 60 in kürzerer Zeit durchgeführt werden kann, da das Experten-Neuronale Netz 6 bereits vortrainiert ist und ein Training daher nicht bei Null starten muss.

Es kann vorgesehen sein, dass mehrere Experten-Neuronale Netze 6 vorgesehen sind, die sich hinsichtlich einer funktionalen und kontextuellen Spezialisierung unterscheiden können. Zum Beispiel können jeweils Experten-Neuronale Netze 6 für die gleiche Funktion (Objekterkennung, semantische Segmentierung, Bounding Box etc.) in verschiedenen Kontexten vorgesehen sein bzw. in der Speichereinrichtung 63 der Datenverarbeitungseinrichtung 61 bereitgehalten werden. Es ist dann vorgesehen, dass die Datenverarbeitungseinrichtung 61 eine Kontextdetektionseinrichtung 64 aufweist, die einen aktuellen Kontext, in dem sich ein Aufklärungsfahrzeug 60 befindet, bestimmt. Dies erfolgt insbesondere mittels der erfassten Sensordaten 52, kann jedoch zusätzlich oder alternativ auch auf Grundlage von beispielsweise Positionsdaten und/oder Wetterdaten (z.B. Sonnenschein oder Regen etc.) erfolgen, die von hierzu eingerichteten Diensten abgefragt werden. Zum Trainieren wird aus den mehreren Experten-Neuronalen Netzen 6 ein mit dem bestimmten Kontext korrespondierendes Experten-Neuronales Netz 6 ausgewählt. Das ausgewählte Experten-Neuronale Netz 6 wird anschließend, wie voranstehend bereits beschrieben, mit den jeweils erfassten Sensordaten 52 trainiert.

Es kann weiter vorgesehen sein, dass eine Spezialisierung für mindestens ein Experten-Neuronales Netz 6 mittels eines Verfahrens des Maschinenlernens festgelegt wird. Hierdurch können für einen Menschen nicht offensichtliche vorteilhafte Spezialisierungen für die Experten-Neuronalen Netze 6 gefunden werden, sodass eine Güte der bereitgestellten Experten-Neuronalen Netze 6 beim Anwenden während einer Inferenzphase weiter erhöht werden kann.

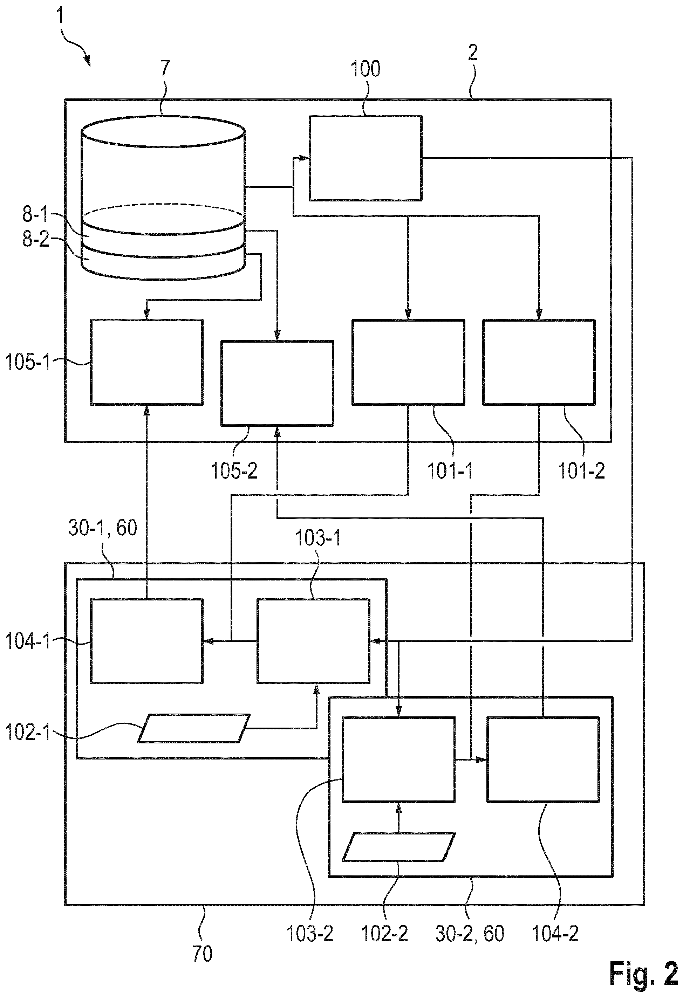

In Fig. 2 ist ein schematisches Ablaufdiagramm zur Verdeutlichung einer Ausführungsform des Verfahrens zum Bereitstellen mindestens eines komprimierten und spezialisierten Neuronalen Netzes für ein Fahrzeug gezeigt.

In einem Verfahrensschritt 100 wird ein Global-Neuronales Netz mittels Trainingsdaten 7 auf dem Backendserver 2 trainiert. Das trainierte Global-Neuronale Netz wird anschließend an Aufklärungsfahrzeuge 60 übermittelt. Dies erfolgt über hierfür eingerichtete Kommunikationsschnittstellen.

In den Verfahrensschritten 101-1 und 101-2 werden Experten-Neuronale Netze im Hinblick auf eine Spezialisierung (d.h. eine jeweilige Expertise) und eine Struktur definiert und mittels des Trainingsdatensatzes 7 vortrainiert. Hierbei werden aus den Trainingsdaten jeweils kontextspezifische Trainingsdaten 8-1, 8-2 ausgewählt, welche jeweils mit den jeweiligen Kontexten 30-1, 30-2 der Experten-Neuronalen Netze korrespondieren. Die jeweils vortrainierten Experten-Neuronalen Netze werden anschließend an die Aufklärungsfahrzeuge 60 übermittelt.

In Verfahrensschritten 102-1 und 102-2 werden jeweils Sensordaten mittels mindestens eines Sensors des jeweiligen Aufklärungsfahrzeugs 60 in dem mit dem jeweiligen Experten-Neuronalen Netz korrespondierenden Kontext 30-1, 30-2 erfasst und gesammelt, indem die erfassten Sensordaten in einer Speichereinrichtung hinterlegt werden.

In Verfahrensschritten 103-1 und 103-2 werden für die erfassten und gesammelten Sensordaten mittels des Global-Neuronalen Netzes jeweils Grundwahrheiten erzeugt, indem das Global-Neuronale Netz auf die jeweils erfassten Sensordaten angewandt wird und ein jeweiliges Inferenzergebnis als Grundwahrheit für ein jeweiliges Sensordatum der Sensordaten verwendet wird.

In Verfahrensschritten 104-1 und 104-2 werden die Experten-Neuronalen Netze mittels der erfassten und gesammelten Sensordaten trainiert, wobei hierbei die in den Verfahrensschritten 103-1 und 103-2 erzeugten Grundwahrheiten verwendet werden.

Die Verfahrensschritte 103-1, 103-2, 104-1 und 104-2 werden solange wiederholt, bis die Experten-Neuronalen Netze eine vorgegebene Güte erreicht haben bzw. bis Parameter der Experten-Neuronalen Netze konvergiert sind.

Die Verfahrensschritte 103-1, 103-2, 104-1 und 104-2 können in den Aufklärungsfahrzeugen 60 beispielsweise immer dann durchgeführt werden, wenn das Aufklärungsfahrzeug 60 in einem Ruhezustand ist, das heißt nicht gefahren oder verwendet wird, sodass eine volle Rechenleistung für das Trainieren zur Verfügung steht.

Die trainierten Experten-Neuronalen Netze werden zurück an den Backendserver 2 übermittelt. Dort werden die trainierten Experten-Neuronalen Netze in den Verfahrensschritten 105-1 und 105-2 mittels der ausgewählten kontextspezifische Trainingsdaten 8-1, 8-2 jeweils nachtrainiert und anschließend zur Anwendung an alle Fahrzeuge der Fahrzeugflotte (nicht gezeigt) übermittelt. **In** den Fahrzeugen werden die übermittelten Experten-Neuronalen Netze dann in Speichereinrichtungen von Steuereinrichtungen eingeladen und können anschließend auf aktuell erfasste Sensordaten angewandt werden.

Es kann in den Verfahrensschritten 105-1 und 105-2 vorgesehen sein, dass hinsichtlich einer Funktionalität und eines Kontextes gleichartige trainierte Experten-Neuronale Netze, die von mehreren Aufklärungsfahrzeugen 60 an den Backendserver 2 übermittelt wurden, zusammengefasst werden, beispielsweise indem Parameter der Experten-Neuronalen Netze elementeweise gemittelt werden.

### Bezugszeichenliste

- 1: System
- 2: Backendserver
- 3: Recheneinrichtung
- 4: Speichereinrichtung
- 5: Global-Neuronales Netz
- 6: Experten-Neuronales Netz
- 7: Trainingsdatensatz
- 8-1: kontextspezifische Trainingsdaten
- 8-2: kontextspezifische Trainingsdaten
- 30-1: Kontext
- 30-2: Kontext
- 50: Fahrzeug
- 51: Sensor
- 52: Sensordaten
- 60: Aufklärungsfahrzeug
- 61: Datenverarbeitungseinrichtung
- 62: Recheneinrichtung
- 63: Speichereinrichtung
- 64: Kontextdetektionseinrichtung
- 70: Fahrzeugflotte
- 100-105: Verfahrensschritte

## Patentansprüche

1. Verfahren zum Bereitstellen mindestens eines komprimierten und spezialisierten Neuronalen Netzes (6) für ein Fahrzeug (50),
wobei ein Global-Neuronales Netz (5) mittels eines Trainingsdatensatzes (7) auf einem Backendserver (2) trainiert wird,
wobei das trainierte Global-Neuronale Netz (5) an mindestens ein Aufklärungsfahrzeug (60) einer Fahrzeugflotte (70) übermittelt wird,
wobei mindestens ein Experten-Neuronales Netz (6) mittels Sensordaten (52), die jeweils in dem mindestens einen Aufklärungsfahrzeug (60) mittels mindestens eines Sensors (51) in einem mit einer Spezialisierung des Experten-Neuronalen Netzes (6) korrespondierenden Kontext (30-x) erfasst wurden, mittels eines Schüler-Lehrer-Lernverfahrens lokal auf dem mindestens einen Aufklärungsfahrzeug (60) trainiert wird, wobei ein Inferenzergebnis des Global-Neuronalen Netzes (5) auf den erfassten Sensordaten (52) hierbei als jeweilige Grundwahrheit verwendet wird, und
wobei das mindestens eine trainierte Experten-Neuronale Netz (6) bereitgestellt wird.

2. Verfahren nach Anspruch 1, **dadurch gekennzeichnet, dass** das Bereitstellen der jeweils trainierten Experten-Neuronalen Netze (6) ein Übermitteln der Experten-Neuronalen Netze (6) von den Aufklärungsfahrzeugen (60) an den Backendserver (2) umfasst, wobei die übermittelten Experten-Neuronalen Netze (6) auf dem Backendserver (2) zusammengeführt werden, und wobei zumindest ein zusammengeführtes Experten-Neuronales Netz (6) jeweils bereitgestellt wird, indem dieses zur Anwendung an Fahrzeuge (50) der Fahrzeugflotte (70) übermittelt wird.

3. Verfahren nach Anspruch 1 oder 2, **dadurch gekennzeichnet, dass** das Bereitstellen der jeweils trainierten Experten-Neuronalen Netze (6) ein Übermitteln der Experten-Neuronalen Netze (6) von den Aufklärungsfahrzeugen (60) an den Backendserver (2) umfasst, wobei die übermittelten Experten-Neuronalen Netze (6) auf dem Backendserver (2) mittels des Trainingsdatensatzes (7) nachtrainiert werden.

4. Verfahren nach Anspruch 2 oder 3, **dadurch gekennzeichnet, dass** die übermittelten Experten-Neuronalen Netze (6) in Bezug auf mindestens ein Optimierungskriterium optimiert werden und/oder ein zusammengeführtes Experten-Neuronales Netz (6) in Bezug auf mindestens ein Optimierungskriterium optimiert wird.

5. Verfahren nach einem der vorangegangenen Ansprüche, **dadurch gekennzeichnet, dass** das mindestens eine Experten-Neuronale Netz (6) vor dem Trainieren mittels des Schüler-Lehrer-Verfahrens bereits vortrainiert ist oder auf dem Backendserver (2) vortrainiert wird.

6. Verfahren nach einem der vorangegangenen Ansprüche, **dadurch gekennzeichnet, dass** ein aktueller Kontext (30-x), in dem sich ein Aufklärungsfahrzeug (60) befindet, mittels einer Kontextdetektionseinrichtung (64) bestimmt wird, wobei zum Trainieren aus mehreren Experten-Neuronalen Netzen (6) ein mit dem bestimmten Kontext (30-x) korrespondierendes Experten-Neuronales Netz (6) ausgewählt wird und das ausgewählte Experten-Neuronale Netz (6) trainiert wird.

7. Verfahren nach einem der vorangegangenen Ansprüche, **dadurch gekennzeichnet, dass** mindestens ein untrainiertes und/oder vortrainiertes Experten-Neuronales Netz (6) vor dem Trainieren von dem Backendserver (2) an das mindestens eine Aufklärungsfahrzeug (60) übermittelt wird.

8. Verfahren nach einem der vorangegangenen Ansprüche, **dadurch gekennzeichnet, dass** eine Spezialisierung für mindestens ein Experten-Neuronales Netz (6) mittels eines Verfahrens des Maschinenlernens festgelegt wird.

9. Verfahren nach einem der vorangegangenen Ansprüche, **dadurch gekennzeichnet, dass** das Global-Neuronale Netz (5) und das mindestens eine Experten-Neuronale Netz (5) eine Funktion für das automatisierte Fahren eines Fahrzeugs (50) und/oder für eine Fahrerassistenz des Fahrzeugs (50) und/oder für eine Umfelderfassung und/oder Umfeldwahrnehmung bereitstellen.

10. System (1) zum Bereitstellen mindestens eines komprimierten und spezialisierten Neuronalen Netzes (6) für ein Fahrzeug (50), umfassend:
einen Backendserver (2), und
mindestens eine Datenverarbeitungseinrichtung (61) mindestens eines Aufklärungsfahrzeugs (60) einer Fahrzeugflotte (70),
wobei der Backendserver (2) dazu eingerichtet ist, ein Global-Neuronales Netz (5) mittels eines Trainingsdatensatzes (7) zu trainieren und das trainierte Global-Neuronale Netz (5) an das mindestens eine Aufklärungsfahrzeug (60) zu übermitteln, und wobei die Datenverarbeitungseinrichtung (61) des mindestens einen Aufklärungsfahrzeuges (60) dazu eingerichtet ist, mindestens ein Experten-Neuronales Netz (6) mittels Sensordaten (52), die jeweils in dem mindestens einen Aufklärungsfahrzeug (60) mittels mindestens eines Sensors (51) in einem mit einer Spezialisierung des Experten-Neuronalen Netzes (6) korrespondierenden Kontext (30-x) erfasst wurden, mittels eines Schüler-Lehrer-Lernverfahrens lokal zu trainieren, und hierbei ein Inferenzergebnis des Global-Neuronalen Netzes (6) auf den erfassten Sensordaten (52) als jeweilige Grundwahrheit zu verwenden, und das mindestens eine trainierte Experten-Neuronale Netz (6) bereitzustellen.

## Claims

1. Method for providing at least one compressed and specialized neural network (6) for a vehicle (50),
wherein a global neural network (5) is trained by means of a training data set (7) on a backend server (2),
wherein the trained global neural network (5) is transmitted to at least one intelligence vehicle (60) of a vehicle fleet (70),
wherein at least one expert neural network (6) is trained locally, by means of a student-teacher learning method, on the at least one intelligence vehicle (60) by means of sensor data (52) which were captured in the at least one intelligence vehicle (60) by means of at least one sensor (51) in a context (30-x) corresponding to a specialization of the expert neural network (6),
wherein an inference result of the global neural network (5) on the captured sensor data (52) is used in this process as a relevant ground truth, and
wherein the at least one trained expert neural network (6) is provided.

2. Method according to claim 1, **characterized in that** providing the respective trained expert neural networks (6) comprises transmitting the expert neural networks (6) from the intelligence vehicles (60) to the backend server (2), wherein the transmitted expert neural networks (6) are merged on the backend server (2), and wherein at least one merged expert neural network (6) is provided in each case by transmitting it for use to vehicles (50) of the vehicle fleet (70).

3. Method according to claim 1 or claim 2, **characterized in that** providing the respective trained expert neural networks (6) comprises transmitting the expert neural networks (6) from the intelligence vehicles (60) to the backend server (2), wherein the transmitted expert neural networks (6) are retrained by means of the training data set (7) on the backend server (2).

4. Method according to claim 2 or claim 3, **characterized in that** the transmitted expert neural networks (6) are optimized with respect to at least one optimization criterion and/or a merged expert neural network (6) is optimized with respect to at least one optimization criterion.

5. Method according to any of the preceding claims, **characterized in that** the at least one expert neural network (6) is already pre-trained prior to training by means of the student-teacher method or is pre-trained on the backend server (2).

6. Method according to any of the preceding claims, **characterized in that** a current context (30-x), in which an intelligence vehicle (60) is located, is determined by means of a context detection device (64), wherein one expert neural network (6) corresponding to the determined context (30-x) is selected for training from a plurality of expert neural networks (6) and the selected expert neural network (6) is trained.

7. Method according to any of the preceding claims, **characterized in that** at least one untrained and/or pre-trained expert neural network (6) is transmitted from the backend server (2) to the at least one intelligence vehicle (60) prior to training.

8. Method according to any of the preceding claims, **characterized in that** a specialization for at least one expert neural network (6) is specified by means of a machine learning method.

9. Method according to any of the preceding claims, **characterized in that** the global neural network (5) and the at least one expert neural network (5) provide a function for automated driving of a vehicle (50) and/or for driver assistance of the vehicle (50) and/or for capturing the environment and/or for perceiving the environment.

10. System (1) for providing at least one compressed and specialized neural network (6) for a vehicle (50), which system comprises:
a backend server (2), and
at least one data processing device (61) of at least one intelligence vehicle (60) of a vehicle fleet (70),
wherein the backend server (2) is designed to train a global neural network (5) by means of a training data set (7) and to transmit the trained global neural network (5) to the at least one intelligence vehicle (60), and
wherein the data processing device (61) of the at least one intelligence vehicle (60) is designed to locally train, by means of a student-teacher learning method, at least one expert neural network (6) by means of sensor data (52) which were captured in the at least one intelligence vehicle (60) by means of at least one sensor (51) in a context (30-x) corresponding to a specialization of the expert neural network (6), and to use an inference result of the global neural network (6) on the captured sensor data (52) in this process as a relevant ground truth, and to provide the at least one trained expert neural network (6).

## Revendications

1. Procédé de fourniture d'au moins un réseau neuronal compressé et spécialisé (6) pour un véhicule (50),
dans lequel un réseau neuronal global (5) est entraîné par le biais d'un jeu de données d'entraînement (7) sur un serveur dorsal (2),
dans lequel le réseau neuronal global (5) entraîné est transmis à au moins un véhicule de reconnaissance (60) d'une flotte de véhicules (70),
dans lequel au moins un réseau neuronal expert (6) est entraîné localement sur l'au moins un véhicule de reconnaissance (60) par le biais de données de capteur (52), qui ont été respectivement acquises dans l'au moins un véhicule de reconnaissance (60) par le biais d'au moins un capteur (51) dans un contexte (30-x) correspondant à une spécialisation du réseau neuronal expert (6), par le biais d'un procédé d'apprentissage élève-enseignant,
dans lequel un résultat d'inférence du réseau neuronal global (5) sur les données de capteur (52) acquises est utilisé à cet effet comme vérité de base respective, et
dans lequel l'au moins un réseau neuronal expert (6) entraîné est fourni.

2. Procédé selon la revendication 1, **caractérisé en ce que** la fourniture des réseaux neuronaux experts (6) respectivement entraînés comprend une transmission des réseaux neuronaux experts (6) des véhicules de reconnaissance (60) au serveur dorsal (2), dans lequel les réseaux neuronaux experts (6) transmis sont fusionnés sur le serveur dorsal (2), et dans lequel au moins un réseau neuronal expert (6) fusionné est respectivement fourni en le transmettant pour application aux véhicules (50) de la flotte de véhicules (70).

3. Procédé selon la revendication 1 ou 2, **caractérisé en ce que** la fourniture des réseaux neuronaux experts (6) respectivement entraînés comprend une transmission des réseaux neuronaux experts (6) des véhicules de reconnaissance (60) au serveur dorsal (2), dans lequel les réseaux neuronaux experts (6) transmis sont post-entraînés sur le serveur dorsal (2) par le biais du jeu de données d'entraînement (7).

4. Procédé selon la revendication 2 ou 3, **caractérisé en ce que** les réseaux neuronaux experts (6) transmis sont optimisés par rapport à au moins un critère d'optimisation et/ou un réseau neuronal expert (6) fusionné est optimisé par rapport à au moins un critère d'optimisation.

5. Procédé selon l'une des revendications précédentes,
**caractérisé en ce que** l'au moins un réseau neuronal expert (6) est déjà pré-entraîné ou est pré-entraîné sur le serveur dorsal (2) avant l'entraînement par le biais du procédé élève-enseignant.

6. Procédé selon l'une des revendications précédentes,
**caractérisé en ce qu'**un contexte (30-x) actuel, dans lequel se trouve un véhicule de reconnaissance (60), est déterminé par le biais d'un dispositif de détection de contexte (64), dans lequel un réseau neuronal expert (6) correspondant au contexte (30-x) déterminé est sélectionné parmi plusieurs réseaux neuronaux experts (6) pour l'entraînement et le réseau neuronal expert (6) sélectionné est entraîné.

7. Procédé selon l'une des revendications précédentes,
**caractérisé en ce qu'**au moins un réseau neuronal expert (6) non entraîné et/ou pré-entraîné est transmis par le serveur dorsal (2) à l'au moins un véhicule de reconnaissance (60) avant l'entraînement.

8. Procédé selon l'une des revendications précédentes,
**caractérisé en ce qu'**une spécialisation pour au moins un réseau neuronal expert (6) est déterminée par le biais d'un procédé d'apprentissage automatique.

9. Procédé selon l'une des revendications précédentes,
**caractérisé en ce que** le réseau neuronal global (5) et l'au moins un réseau neuronal expert (5) fournissent une fonction pour la conduite automatisée d'un véhicule (50) et/ou pour une assistance au conducteur du véhicule (50) et/ou pour une acquisition d'environnement et/ou une perception d'environnement.

10. Système (1) de fourniture d'au moins un réseau neuronal compressé et spécialisé (6) pour un véhicule (50), comprenant :
un serveur dorsal (2), et
au moins un dispositif de traitement de données (61) d'au moins un véhicule de reconnaissance (60) d'une flotte de véhicules (70),
dans lequel le serveur dorsal (2) est conçu pour entraîner un réseau neuronal global (5) par le biais d'un jeu de données d'entraînement (7) et pour transmettre le réseau neuronal global (5) entraîné à l'au moins un véhicule de reconnaissance (60), et
dans lequel le dispositif de traitement de données (61) de l'au moins un véhicule de reconnaissance (60) est conçu pour entraîner localement, par le biais d'un procédé d'apprentissage élève-enseignant, au moins un réseau neuronal expert (6) par le biais de données de capteur (52) qui ont été respectivement acquises dans l'au moins un véhicule de reconnaissance (60) par le biais d'au moins un capteur (51) dans un contexte (30-x) correspondant à une spécialisation du réseau neuronal expert (6), et utiliser à cet effet un résultat d'inférence du réseau neuronal global (6) sur les données de capteur (52) acquises comme vérité de base respective, et fournir l'au moins un réseau neuronal expert (6) entraîné.
